# EUROPÄISCHE PATENTSCHRIFT

(11) **EP 3 059 824 B1**
(45) Veröffentlichungstag und Bekanntmachung des Hinweises auf die Patenterteilung: **18.10.2017**
(21) Anmeldenummer: 16150619.1
(22) Anmeldetag: 08.01.2016
(51) Int. Cl.: H02G 3/12, H02G 3/14

(54) **ELEKTROINSTALLATIONSGERÄT MIT VERSATZTOLERANTEM TRAGRING**
ELECTRICAL INSTALLATION APPARATUS WITH OFFSET TOLERANT SUPPORT RING
APPAREIL D'INSTALLATION ELECTRIQUE COMPRENANT UN ANNEAU DE PORTAGE PERMETTANT LES DEPORTS

(30) Priorität: 18.02.2015 EP 15155652
(43) Veröffentlichungstag der Anmeldung: 24.08.2016
(73) Patentinhaber: GIRA GIERSIEPEN GmbH & Co. KG, 42477 Radevormwald (DE)
(72) Erfinder: Strehle, Ronny, 42499 Hückeswagen (DE); Schütze, Andreas, 45659 Recklinghausen (DE); Schmidt, Stefan, 45481 Mühlheim (DE)
(74) Vertreter: Patent- und Rechtsanwälte Dr. Solf & Zapf

(56) Entgegenhaltungen:
- DE-A1- 4 032 142
- DE-U1- 29 911 298

## Beschreibung

Die Erfindung betrifft ein Elektroinstallationsgerät nach den Merkmalen des Oberbegriffs des Anspruchs 1. Weiter betrifft die Erfindung einen Tragring für ein erfindungsgemäßes Elektroinstallationsgerät.

DE 299 11 298 offenbart ein Elektroinstallationsgerät gemäß dem Oberbegriff von Anspruch 1. Bekannt ist nach Stand der Technik ein Elektroinstallationsgerät mit einem Tragring zur Montage an einer Gerätedose, wobei der Tragring vier sich paarweise gegenüberliegende und um eine Durchgangsöffnung des Tragrings angeordnete Öffnungen mit einem Schlüssellochprofil aufweist, wobei jede Öffnung jeweils einen bogenförmigen Ringabschnitt umfasst, wobei die sich gegenüberliegenden, bogenförmigen Ringabschnitte konkav zueinander angeordnet sind, wobei die Öffnungen in Bogenmaß um π/2 zum Mittelpunkt der Ringabschnitte beabstandet sind, und wobei alle vier Ringabschnitte jeweils an einem Bogenende einen Kreisabschnitt aufweisen, wobei der Durchmesser jedes Kreisabschnitts größer ist als die radiale Dicke seines bogenförmigen Ringabschnitts.

Derartige Elektroinstallationsgeräte und Tragringe haben sich im Stand der Technik etabliert und ermöglichen eine schnelle Installation des Elektroinstallationsgeräts in einer handelsüblichen Gerätedose. Eine solche Gerätedose ist als zylinderförmiger Körper ausgebildet und weist mittlerweile üblicherweise vier Schraubdomen auf, die paarweise horizontal und vertikal gegenüberliegend zur Querschnittsebene der Gerätedose angeordnet sind. Grundsätzlich werden zur schnellen Montage des Elektroinstallationsgeräts nur zwei sich gegenüberliegende Öffnungen mit zwei sich gegenüberliegenden Schraubdomen mittels zweier Geräteschrauben verschraubt. Die Kreisabschnitte sind an den Öffnungen vorgesehen, um eine Montage und Demontage des Elektroinstallationsgeräts mit teilweise eingeschraubten Geräteschrauben zu ermöglichen, wodurch der Montagevorgang vereinfacht wird.

Üblicherweise ist bei der Montage des Elektroinstallationsgeräts darauf zu achten, dass es im montierten Zustand keinen umfangsgemäßen Versatz aufweist. Andernfalls ist die für den durchschnittlichen Benutzer gewohnte Bedienung des Elektroinstallationsgeräts wegen seiner ungewöhnlichen bzw. versetzten Anordnung erschwert sowie die optische Erscheinung störend. Weiter problematisch ist eine Mehrfachanordnung von Elektroinstallationsgeräten in Reihe, sofern die Gerätedosen für die Elektroinstallationsgeräte einen umfangsgemäß unterschiedlichen Versatz aufweisen.

Die umfangsgemäße Ausrichtung des Elektroinstallationsgeräts hängt unmittelbar von der montierten Verbindung seines Tragrings mit der Gerätedose ab. Um den umfangsgemäßen Versatz einer Gerätedose bei der Montage eines Elektroinstallationsgeräts auszugleichen, umfasst ein Tragring nach Stand der Technik gegenüberliegend angeordnete Öffnungen mit einem Schlüssellochprofil. Hierzu erfolgt die Verschraubung des Tragrings an der Gerätedose über Geräteschrauben, die durch die vorgenannten Öffnungen des Tragrings führen. Dabei ist der Durchmesser des Schraubenkopfes der Geräteschraube kleiner oder gleich dem Durchmesser des Kreisabschnitts der Öffnung des Tragrings und größer als die radiale Dicke des bogenförmigen Ringabschnitts der Öffnung des Tragrings.

Zur Montage des Elektroinstallationsgeräts in einer umfangsgemäß versetzten Gerätedose wird das Elektroinstallationsgerät in einer Einsteckrichtung in die Gerätedose eingeführt, wobei sich die Kreisabschnitte mindestens zweier gegenüberliegend angeordneter Öffnungen mit den gegenüberliegend angeordneten Schraubdomen der Gerätedose in Einsteckrichtung koaxial decken. Die Geräteschrauben greifen mit ihren Schraubenschäften durch die Kreisabschnitte in die Schraubdomen. Bevor die Geräteschrauben weiter eingeschraubt werden, wird das Elektroinstallationsgerät entlang der bogenförmigen Ringabschnitte der Öffnungen umfangsgemäß tordiert, bis das Elektroinstallationsgerät horizontal und vertikal gemäß den Montagevorgaben angeordnet ist. Erst dann werden die Geräteschrauben vollständig eingeschraubt. Dabei presst der Schraubenkopf jeweils auf die umgebende Auflagefläche des bogenförmigen Ringabschnitts und fixiert dadurch den Fixierring bzw. das Elektroinstallationsgerät an der Gerätedose.

Der versatzkorrigierte Tragring ist dann besonders fest an der Gerätedose festgeschraubt, wenn der Schraubenkopf im montierten Zustand mit einer möglichst großen Schraubenkopfauflagefläche an der umgebenden Auflagefläche des bogenförmigen Ringabschnitts des Tragrings aufliegt, also zumindest nicht teilweise im Kreisabschnitt der Öffnung angeordnet ist. Bei einem zu starken Versatz des Tragrings gegenüber der Gerätedose in Richtung des Kreisabschnitts der Öffnung besteht das Risiko, dass der Schraubenkopf in den Kreisabschnitt der Öffnung gleitet und der Tragring somit kein hinreichend fixierendes Gegenlager für den Schraubenkopf bildet. Das unzureichende Gegenlager stellt nach Stand der Technik jedoch ein Problem bei der Montage dar.

Bisher ist zur Umgehung des Problems eine erneute Installation der Gerätedose vorgesehen. Problematisch an dieser Lösung ist, dass ein zusätzlicher, teurer Montageaufwand generiert wird, wodurch sich die Montage des Elektroinstallationsgeräts zudem verzögert.

Der Erfindung liegt daher die Aufgabe zugrunde, ein Elektroinstallationsgerät der eingangs genannten Art zu schaffen, das bei seiner Montage eine einfache, günstige und schnelle Korrektur eines umfangsgemäßen Versatzes einer Gerätedose ermöglicht.

Die Aufgabe wird erfindungsgemäß durch die Merkmale des kennzeichnenden Teils des Anspruchs 1 gelöst. Dadurch, dass bei zwei gegenüberliegenden Öffnungen die Kreisabschnitte im Uhrzeigersinn an den Bogenenden der Ringabschnitte angeordnet sind und dass bei den anderen beiden gegenüberliegenden Öffnungen die Kreisabschnitte entgegen dem Uhrzeigersinn an den Bogenenden der Ringabschnitte angeordnet sind, ist grundsätzlich eine paarweise Konstellation der sich gegenüberliegenden Öffnungen vorhanden, bei der jeweils ein Schraubenkopf einer Geräteschraube im Montagezustand keine Deckungsebene mit den sich gegenüberliegenden Kreisabschnitten der Öffnungen aufweist.

Umso weiter der Tragring des Elektroinstallationsgeräts mit den ersten, paarweise gegenüberliegenden Öffnungen zur Korrektur des Versatzes in Richtung einer jeweils zunehmenden, koaxialen Deckungsfläche von Kreisabschnitt und Schraubenkopf umfangsgemäß tordiert wird, desto weiter entfernt sich bei den zweiten, paarweise gegenüberliegenden Öffnungen wegen der erfindungsgemäß umgekehrt angeordneten Kreisabschnitte jeweils die koaxiale Deckungsfläche von Kreisabschnitt und Schraubenkopf. Demnach sind durch die erfindungsgemäße Anordnung der Kreisabschnitte im eingefügten Zustand des Elektroinstallationsgeräts in die Gerätedose und bei korrigiertem Versatz mindestens zwei sich paarweise gegenüberliegende Öffnungen mit ihren Kreisabschnitten nicht im koaxialen Deckungsbereich mit den Schraubköpfen der Geräteschrauben. So wird in beiden Verdrehrichtungen die zumindest teilweise Auflage des Schraubenkopfes auf den Kreisabschnitt vermieden.

Ebenfalls erfindungsgemäß ist ein Tragring zur Montage an einer Gerätedose mit den Merkmalen des Tragrings nach Anspruch 1 vorgesehen.

Die erfindungsgemäße Ausgestaltung ergibt sich aus der folgenden Figurenbeschreibung und dem abhängigen Unteranspruch.

Es zeigen:
- Fig. 1: eine schematische Frontansicht auf die Stirnfläche eines erfindungsgemäßen Tragrings,
- Fig. 2: den Tragring gemäß Fig. 1 in eine Gerätedose mit Versatz eingeschraubt,
- Fig. 3: einen Ausschnitt A aus Fig. 2,
- Fig. 4: einen Ausschnitt B aus Fig. 2 und
- Fig. 5: den Ausschnitt B aus Fig. 2 bzw. Fig. 4 mit eingesetzter Geräteschraube.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

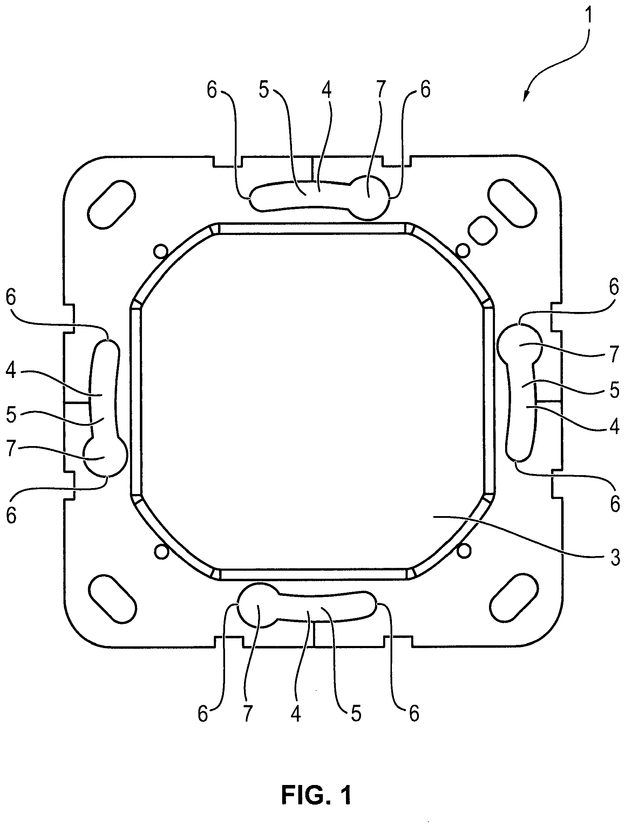

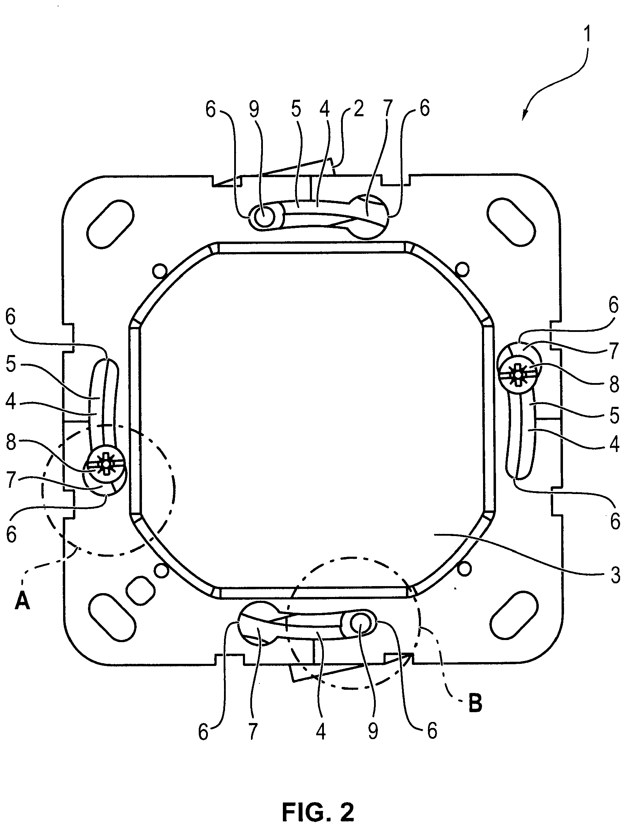

Die Figuren 1 und 2 zeigen eine bevorzugte Ausführungsform eines Tragrings 1 eines erfindungsgemäßen Elektroinstallationsgeräts, wobei der Tragring 1 in Figur 2 in eine Gerätedose 2 eingesetzt ist. Der Tragring 1 weist eine Durchgangsöffnung 3 für ein nicht dargestelltes Sockelteil auf. Ebenfalls umfasst der Tragring 1 vier, sich paarweise gegenüberliegende Öffnungen 4, die um die Durchgangsöffnung 3 paarweise, vorzugsweise horizontal und vertikal, angeordnet und mit einem Bogenmaß zum jeweiligen Mittelpunkt des Ringabschnitts von π/2 beabstandet sind. Die Öffnungen weisen jeweils ein Schlüssellochprofil auf, d.h. sie umfassen jeweils einen Ringabschnitt 5 und an jeweils einem Bogenende 6 des Ringabschnitts 5 einen Kreisabschnitt 7. Die Ringabschnitte 5 weisen eine bogenförmige Kontur auf, wobei zwei gegenüberliegende Ringabschnitte 5 zueinander stets konkav zueinander angeordnet sind. Der Durchmesser jedes Kreisabschnitts 7 ist größer ist als die radiale Dicke seines bogenförmigen Ringabschnitts 5.

In einer Ausführungsform der Erfindung sind bei den sich paarweise vertikal gegenüberliegenden Öffnungen 4 die Kreisabschnitte 7 im Uhrzeigersinn an den Bogenenden 6 der Ringabschnitte 5 angeordnet. Dabei sind bei den sich paarweise horizontal gegenüberliegenden Öffnungen 4 die Kreisabschnitte 7 entgegen dem Uhrzeigersinn an den Bogenenden 6 der Ringabschnitte 5 angeordnet.

Der Tragring 1 wird vorzugsweise mit zwei Geräteschrauben an der Gerätedose 2 festgeschraubt. Hierbei werden die Geräteschrauben in zwei sich vorzugsweise gegenüberliegende Schraubdomen 9 eingeschraubt, wobei die Geräteschrauben die sich paarweise gegenüberliegenden Öffnungen 4 des Tragrings 1 durchdringen.

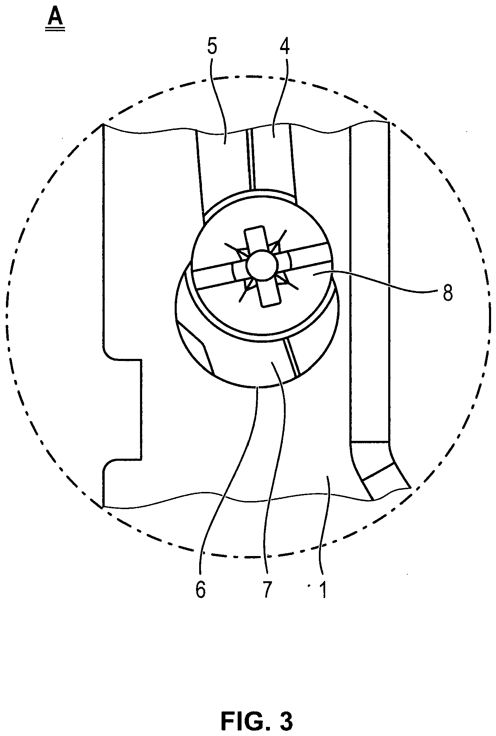

In Figur 2 ist eine Montagesituation dargestellt, bei welcher die beiden Geräteschrauben mit ihren Schraubenköpfen 8 teilweise in den beiden sich horizontal gegenüberliegenden Kreisabschnitten 7 angeordnet sind, wobei an diesen Stellen der Kreisabschnitte 7 keine Auflagefläche für die Schraubenköpfe 8 vorhanden ist. Wegen der zumindest teilweise fehlenden Auflagefläche der Schraubenköpfe 8 im jeweiligen Kreisabschnitt 7, ist ein nur unzureichender Halt des Elektroinstallationsgeräts an der Gerätedose 2 gewährleistet. Dies ist insbesondere in Figur 3, also Abschnitt A aus Figur 2, zu erkennen. Gemäß Figur 3 liegt etwa der halbe Schraubenkopf 8 im Kreisabschnitt 7, wodurch dem Schraubenkopf 8 Auflagefläche am Tragring 1 zum Fixieren des Elektroinstallationsgeräts fehlt.

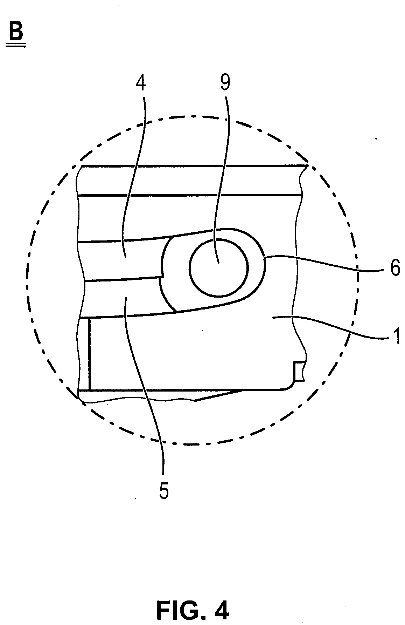

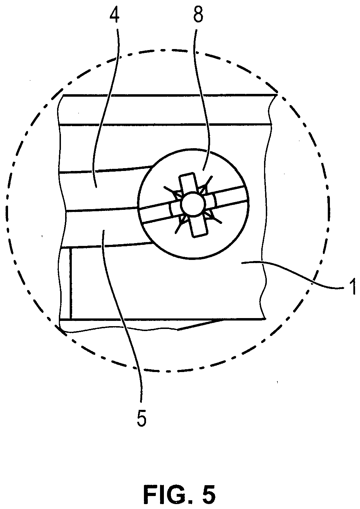

Die fehlende Auflagefläche des Tragrings 1 für die Schraubenköpfe 8 gemäß den Figuren 2 und 3 ist durch die erfindungsgemäße Anordnung der Kreisabschnitte der sich paarweise gegenüberliegenden Öffnungen 4 gemäß den Figuren 1 und 2 ohne Austausch des Elektroinstallationsgeräts, des Tragrings 1 oder Umbau der Gerätedose 2 zu überwinden. Gemäß der beispielhaften Montagesituation aus Figur 2 sind die Geräteschrauben aus den sich paarweise horizontal gegenüberliegend angeordneten Schraubdomen 9 herauszuschrauben und in die sich paarweise vertikal gegenüberliegend angeordneten Schraubdomen 9 einzuschrauben. Figur 4 zeigt einen vergrößerten Ausschnitt B gemäß Figur 2, wobei nach Figur 2 die beiden sich paarweise vertikal gegenüberliegend angeordneten Schraubdomen 9 derart jeweils am Bogenende 6 der sich gegenüberliegenden, bogenförmigen Ringabschnitte 5 angeordnet sind, dass die Schraubenköpfe 8 in der Montagesituation des Tragrings 1 eine möglichst große Auflagefläche am Tragring 1 erhalten, siehe Fig. 5.

Die Erfindung ist nicht auf die dargestellten und beschriebenen Ausführungsbeispiele beschränkt. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine Bedeutung haben.

Insbesondere kann die Orientierung der Kreisabschnitte 7 zu den Bogenenden 6 der Ringabschnitte 5 der Öffnungen 4 entgegengesetzt zu der Orientierung der Kreisabschnitte 7 zu den Bogenenden 6 der Ringabschnitte 5 der Öffnungen 4 gemäß den Figuren 1 und 2 sein. Weiter müssen die Schraubdomen 9 der Gerätedose 2 bzw. die Öffnungen 4 des Tragrings 1 nicht horizontal bzw. vertikal gegenüberliegend angeordnet sein. Wichtig ist, dass die Öffnungen 4 des Tragrings 1 über Torsion des Tragrings 1 mit den Schraubdomen 9 der Gerätedose 2 in Deckung gebracht werden können.

### Bezugszeichenliste

- 1: Tragring
- 2: Gerätedose
- 3: Durchgangsöffnung
- 4: Öffnung
- 5: Ringabschnitt
- 6: Bogenende
- 7: Kreisabschnitt
- 8: Schraubenkopf
- 9: Schraubdomen

## Patentansprüche

1. Elektroinstallationsgerät mit einem Tragring (1) zur Montage an einer Gerätedose (2), wobei der Tragring (1) vier sich paarweise gegenüberliegende und um eine Durchgangsöffnung (3) des Tragrings (1) angeordnete Öffnungen (4) mit einem Schlüssellochprofil aufweist, wobei jede Öffnung (4) jeweils einen bogenförmigen Ringabschnitt (5) umfasst, wobei die sich gegenüberliegenden, bogenförmigen Ringabschnitte (5) konkav zueinander angeordnet sind, wobei die Öffnungen (4) in Bogenmaß um π/2 zum Mittelpunkt der Ringabschnitte (5) beabstandet sind, und wobei alle vier Ringabschnitte (5) jeweils an einem Bogenende (6) einen Kreisabschnitt (7) aufweisen, wobei der Durchmesser jedes Kreisabschnitts (7) größer ist als die radiale Dicke seines bogenförmigen Ringabschnitts(5),
**dadurch gekennzeichnet, dass** bei zwei gegenüberliegenden Öffnungen (4) die Kreisabschnitte (7) im Uhrzeigersinn an den Bogenenden (6) der Ringabschnitte (5) angeordnet sind und dass bei den anderen beiden gegenüberliegenden Öffnungen (4) die Kreisabschnitte (7) entgegen dem Uhrzeigersinn an den Bogenenden (6) der Ringabschnitte (5) angeordnet sind.

2. Tragring zur Montage an einer Gerätedose,
**gekennzeichnet durch** die Merkmale des Tragrings (1) nach Anspruch 1.

## Claims

1. Electrical installation device having a supporting ring (1) for mounting on a connector socket (2), the supporting ring (1) having four openings (4) with a keyhole profile which lie opposite one another in pairs and are arranged around a through opening (3) of the supporting ring (1), each opening (4) comprising in each case one arcuate ring section (5), the arcuate ring sections (5) which lie opposite one another being arranged concavely with respect to one another, the openings (4) being spaced apart from the centre point of the ring sections (5) by a radian measure of n/2, and all four ring sections (5) having a circular section (7) in each case at one arc end (6), the diameter of each circular section (7) being greater than the radial thickness of its arcuate ring section (5), **characterized in that**, in the case of two openings (4) which lie opposite one another, the circular sections (7) are arranged in the clockwise direction at the arc ends (6) of the ring sections (5), and **in that**, in the case of the other two openings (4) which lie opposite one another, the circular sections (7) are arranged counter to the clockwise direction at the arc ends (6) of the ring sections (5).

2. Supporting ring for mounting on a connector socket, **characterized by** the features of the supporting ring (1) according to Claim 1.

## Revendications

1. Appareil d'installation électrique avec une bague support (1) pour le montage sur une prise d'appareil (2), la bague support (1) présentant quatre ouvertures (4) avec un profil en trou de serrure opposées par paires et disposées autour d'une ouverture de passage (3) de la bague support (1), chaque ouverture (4) comprenant respectivement un tronçon de bague (5) arqué, les tronçons de bague (5) opposés arqués étant disposés de façon concave les uns par rapport aux autres, les ouvertures (4) étant, en radians, distantes de n/2 du point central des tronçons de bague (5), et les quatre tronçons de bague (5) présentant tous respectivement à une extrémité d'arc (6) un tronçon de cercle (7), le diamètre de chaque tronçon de cercle (7) étant plus grand que l'épaisseur radiale de son tronçon de bague (5) arqué,
**caractérisé en ce que**, pour deux ouvertures (4) opposées, les tronçons de cercle (7) sont disposés dans le sens horaire sur les extrémités d'arc (6) des tronçons de bague (5), et **en ce que**, pour les deux autres ouvertures (4) opposées, les tronçons de cercle (7) sont disposés dans le sens antihoraire sur les extrémités d'arc (6) des tronçons de bague (5).

2. Bague support destinée à être montée sur une prise d'appareil,
**caractérisée par** les caractéristiques de la bague support (1) selon la revendication 1.
